# EUROPEAN PATENT APPLICATION

(11) **EP 4 339 646 A1**
(43) Date of publication of application: **20.03.2024**
(21) Application number: 21946319.7
(22) Date of filing: 21.06.2021
(51) Int. Cl.: G01S 13/42

(54) **ANTENNA ARRAY, DETECTION DEVICE, AND TERMINAL**

(71) Applicant: Huawei Technologies Co., Ltd., Shenzhen, Guangdong 518129 (CN)
(72) Inventor: GAO, Lei, Shenzhen, Guangdong 518129 (CN); MA, Sha, Shenzhen, Guangdong 518129 (CN)
(74) Representative: Goddar, Heinz J.
(86) International application number: PCT/CN2021/101345
(87) International publication number: WO 2022/266817

(57) **Abstract**

An antenna array provided in this application may be applied to the sensor field, and can improve radiation performance of an antenna. The antenna array may be applied to a detection device (for example, a radar), to improve a distance resolution of the detection device. The antenna array or the detection device may be applied to a terminal, to improve a sensing capability of the terminal. The antenna array includes a plurality of antenna groups, where each of the plurality of antenna groups includes a first antenna and a second antenna; the first antenna is configured to transmit a detection signal, and the second antenna is configured to receive an echo signal of the detection signal; and operating frequency bands corresponding to at least two antenna groups in the plurality of antenna groups do not completely overlap.

## Description

### TECHNICAL FIELD

Embodiments of this application relate to the sensor field, and more specifically, to an antenna array, a detection device, and a terminal in the sensor field.

### BACKGROUND

With development of society and progress of science and technology, intelligent vehicles gradually enter people's daily life. A sensor plays a very important role in self-driving and intelligent driving of an intelligent vehicle. The sensor may be a millimeter-wave radar, a lidar, an ultrasonic radar, a camera, or the like. A distance resolution of a radar is one of important indexes to measure performance of the radar. The distance resolution of the radar is in direct proportion to a bandwidth of the radar.

Therefore, the distance resolution of the radar can be improved by increasing an operating bandwidth of the radar.

### SUMMARY

Embodiments of this application provide a broadband antenna array, to improve radiation performance of an antenna. The antenna array may be applied to a detection device (for example, a radar), to improve a distance resolution of the detection device. The antenna array or the detection device may be applied to a terminal, to improve a sensing capability of the terminal.

According to a first aspect, this application provides an antenna array, including a plurality of antenna groups, where each of the plurality of antenna groups includes a first antenna and a second antenna; the first antenna is configured to transmit a detection signal, and the second antenna is configured to receive an echo signal of the detection signal; and operating frequency bands corresponding to at least two antenna groups in the plurality of antenna groups do not completely overlap.

Optionally, center points of the plurality of antenna groups are the same. In other words, distance measurement reference points of the plurality of antenna groups are the same. This facilitates joint working of the plurality of antenna groups.

It should be noted that, in this application, a center point of a single antenna group is a reference point used by the antenna group for distance measurement. In other words, when distance measurement is performed on a target by using the antenna group, a distance between the target and the center point of the antenna group is measured.

It should be further noted that, in this application, the center points being the same includes the center points being completely the same and being approximately the same, where the center points being approximately the same means that a difference between the center points of the antenna groups is within a specific error range. The error range is an error that may exist in industrial manufacturing, an error that is allowed to exist in a structure design, or the like. The error range is not specifically limited herein.

In a possible implementation, a center point of a single antenna group may be a midpoint between a reference point corresponding to a first antenna in the antenna group and a reference point corresponding to a second antenna in the antenna group.

Optionally, a position of the reference point corresponding to the first antenna or a position of the reference point corresponding to the second antenna is not limited in this application. For example, the reference point of the first antenna (the second antenna) may be a center of the first antenna (the second antenna), a center of gravity of the first antenna (the second antenna), or any position of the first antenna (the second antenna).

Optionally, a first antenna and a second antenna in a same antenna group may be a same antenna. In other words, an antenna that transmits a detection signal and an antenna that receives an echo signal in the antenna group are a same antenna. In this case, a reference point corresponding to the first antenna and a reference point corresponding to the second antenna in the antenna group are a same reference point.

It should be noted that, in this application, that the frequency bands do not completely overlap may include that the frequency bands do not overlap or partially overlap. In other words, frequency bands of detection signals corresponding to at least two antenna groups in the plurality of antenna groups do not overlap or partially overlap. A relationship between a frequency band of a detection signal corresponding to an antenna group other than the at least two antenna groups in the plurality of antenna groups and a frequency band of a detection signal corresponding to any one of the at least two antenna groups is not limited in this application, that is, the frequency bands may completely overlap, partially overlap, or do not overlap.

In this application, in the plurality of antenna groups, frequency bands of detection signals corresponding to at least two antenna groups do not completely overlap. In this way, a joint operating bandwidth of the plurality of antenna groups is greater than an operating bandwidth of a single antenna group. When the plurality of antenna groups work jointly, the antenna array may support broadband operating. To be specific, a plurality of antenna groups with narrow operating frequency bands may work jointly, so that antenna groups with different sub-bandwidths are spliced into a broadband antenna array. In this way, the broadband antenna array is implemented.

It should be noted that the detection signal corresponding to the antenna group in this application may be understood as a detection signal transmitted by a first antenna in the antenna group, the echo signal corresponding to the antenna group may be understood as an echo signal received by a second antenna in the antenna group, and the echo signal is an echo signal corresponding to the detection signal by default. When the antenna array is used for a terminal (for example, a tablet), the detection signal may be replaced with a transmit signal, and the echo signal may be replaced with a receive signal.

In a possible implementation, in the plurality of antenna groups, frequency bands of detection signals corresponding to at least two antenna groups partially overlap.

It can be learned from the foregoing description that an operating bandwidth of a radar is in direct proportion to a distance resolution. In other words, a larger operating bandwidth indicates a higher distance resolution. When the broadband antenna array is applied to a detection device, for example, applied to the radar, a distance resolution of joint distance measurement performed by the detection device by using a joint echo signal corresponding to the plurality of antenna groups (namely, the antenna array) is greater than a distance resolution of distance measurement performed by using an echo signal corresponding to a single antenna group. In other words, a distance resolution of distance measurement based on the single antenna group is usually less than a distance resolution of joint distance measurement based on the plurality of antenna groups (namely, the antenna array).

In addition, for joint distance measurement based on the antenna array, a reference frequency interval between detection signals of adjacent reference frequencies is usually in inverse proportion to a distance measurement range of joint distance measurement performed by using the antenna array. In other words, a larger reference frequency interval indicates a smaller distance measurement range of joint distance measurement performed by using the antenna array. Usually, the reference frequency interval and a bandwidth of a single antenna group are in a same order of magnitude. When the antenna array is applied to the detection device, for example, applied to the radar, a distance measurement range of joint distance measurement performed by the detection device by using the joint echo signal corresponding to the plurality of antenna groups and a distance resolution of distance measurement performed by the detection device by using an echo signal corresponding to a single antenna group are in a same order of magnitude. However, a distance measurement range of distance measurement based on the single antenna group is usually greater than the distance resolution of distance measurement based on the single antenna group. Therefore, the distance measurement range of distance measurement based on the single antenna group is usually greater than the distance measurement range of joint distance measurement based on the plurality of antenna groups (namely, the antenna array). The joint echo signal is a general term of a plurality of echo signals corresponding to the plurality of antenna groups. It may be understood that the joint echo signal is a broadband echo signal obtained by combining echo signals corresponding to different antenna groups.

In conclusion, the distance measurement based on the single antenna group has features of a high distance measurement range and a low distance resolution, and the joint distance measurement based on the antenna array (namely, the plurality of antenna groups) has features of a low distance measurement range and a high distance resolution. Therefore, the distance measurement features of the single antenna group and the joint distance measurement features of the plurality of antenna groups are combined, so that the detection device can implement a distance measurement capability with a high range and a high distance resolution.

Based on the foregoing description, if frequency bands of detection signals corresponding to at least two antenna groups in the antenna array partially overlap, a reference frequency interval between the detection signals corresponding to the at least two antenna groups may be less than a bandwidth of a detection signal corresponding to a single antenna group. When the broadband antenna array is applied to a detection device, for example, applied to a radar, a distance measurement range of joint distance measurement performed by the detection device by using the joint echo signal corresponding to the plurality of antenna groups may be greater than a distance resolution of distance measurement performed by the detection device by using the echo signal corresponding to the single antenna group. In this way, for a point target, a distance measurement result of distance measurement based on the single antenna group and a distance measurement result of joint distance measurement based on the antenna array (namely, the plurality of antenna groups) are combined, so that a high-distance-resolution distance measurement result may be obtained within a distance measurement range of the single antenna group, thereby reducing a problem of distance blur caused because the distance resolution of distance measurement based on the single antenna group is greater than the distance measurement range of joint distance measurement based on the antenna array (namely, the plurality of antenna groups).

Optionally, the reference frequency of the detection signal in this application may be a center frequency, a carrier frequency, a lowest frequency, or a highest frequency of the detection signal. This is not limited in this embodiment of this application.

In a possible implementation, bandwidths of detection signals corresponding to different antenna groups are equal. In this way, when the antenna array is applied to a detection device, for example, applied to a radar, antenna groups in the plurality of antenna groups (namely, the antenna array) correspond to a same distance resolution, so that algorithm complexity of joint distance measurement based on the antenna array (namely, the plurality of antenna groups) can be reduced, and an error can be reduced.

In a possible implementation, reference frequencies of detection signals corresponding to different antenna groups are distributed at an equal interval. That is, reference frequency intervals between detection signals of adjacent reference frequencies are equal. When the antenna array is applied to a detection device, for example, applied to a radar, when the detection device performs distance measurement based on the joint echo signal corresponding to the antenna array, that is, performs joint distance measurement based on the joint echo signal corresponding to the plurality of antenna groups, the detection device may perform pulse compression on echo signals of different antenna groups according to a discrete Fourier transform algorithm, so that a joint distance measurement algorithm can be further simplified. The joint echo signal is a general term of a plurality of echo signals corresponding to the plurality of antenna groups. It may be understood that the joint echo signal is a broadband echo signal obtained by combining echo signals corresponding to different antenna groups.

Optionally, detection signals corresponding to different antenna groups satisfy one or more of the following: Frequency bands do not completely overlap, bandwidths are equal, and reference frequencies are distributed at an equal interval.

In a possible implementation, first parameters of detection signals corresponding to different antenna groups are equal, and the first parameter is a product of a pulse repetition cycle of the detection signal and a reference frequency of the detection signal.

When the antenna array is applied to a detection device, for example, applied to a radar, a speed measurement range of the detection device is in direct proportion to a pulse repetition cycle of the detection signal, and is in direct proportion to a reference frequency of the detection signal. Therefore, the first parameter is to establish a relationship between a transmit waveform of the detection signal and a reference frequency of the detection signal. When first parameters of detection signals corresponding to different antenna groups in the plurality of antenna groups (namely, the antenna array) are equal, different antenna groups correspond to a same speed measurement range. Further, if echo signals corresponding to different antenna groups in the plurality of antenna groups (namely, the antenna array) have a same quantity of pulses, that is, speed resolutions corresponding to speed measurement based on the different antenna groups are equal, when pulse compression is performed on a speed spectrum of the joint echo signal corresponding to the plurality of antenna groups (namely, the antenna array) in the reference frequency dimension corresponding to the antenna array, it is easier to establish a correspondence between speed spectrums of the echo signals corresponding to the different antenna groups in the plurality of antenna groups (namely, the antenna array). In this way, a joint distance measurement algorithm is simplified.

In a possible implementation, second parameters of different antenna groups are equal, and the second parameter is a product of the reference frequency of the detection signal and a sampling interval of the echo signal, or the second parameter may be a ratio of a reference wavelength of the detection signal to a sampling interval of the echo signal.

The detection device needs to perform, in a reference frequency dimension of the detection signal corresponding to the antenna group, pulse compression on a joint distance spectrum including distance spectrums (namely, a low-resolution wide-range distance spectrum obtained through pulse compression performed on echo signals corresponding to the antenna groups in the fast time dimension) of the echo signals corresponding to the plurality of antenna groups (namely, the antenna array), to implement joint distance measurement. When the antenna array is applied to a detection device, for example, applied to a radar, second parameters of different antenna groups are equal, so that coupling between a reference frequency dimension corresponding to the antenna array and a distance dimension corresponding to a single antenna group can be avoided. If the reference frequency dimension corresponding to the antenna array and the distance dimension corresponding to the single antenna group are coupled, the detection device cannot separately perform pulse compression on the two dimensions. In other words, second parameters of different antenna groups are equal, so that pulse compression can be separately performed on the two dimensions. In this way, in a joint distance measurement algorithm based on the plurality of antenna groups (namely, the antenna array), a correction algorithm for approximately eliminating coupling does not need to be performed, thereby simplifying a joint distance measurement algorithm, and avoiding an error caused because the correction algorithm cannot completely eliminate a coupling term.

In a possible implementation, when the detection signal is a linear frequency modulated continuous wave, if frequency modulation slopes of detection signals corresponding to different antenna groups are in direct proportion to reference frequencies of the detection signals, and second parameters corresponding to the different antenna groups are equal, when the antenna array is applied to a detection device, for example, applied to a radar, distance measurement ranges for the detection device to perform distance measurement based on echo signals corresponding to the antenna groups in the plurality of antenna groups (namely, the antenna array) are equal. Therefore, distance measurement ranges of distance measurement based on the antenna groups in the plurality of antenna groups (namely, the antenna array) can be aligned. In this way, algorithm complexity of joint distance measurement based on the plurality of antenna groups (namely, the antenna array) can be reduced, a distance measurement error is reduced, and distance measurement precision is improved.

In addition, if frequency modulation slopes of detection signals corresponding to different antenna groups are in direct proportion to reference frequencies of the detection signals, and third parameters of the detection signals corresponding to the different antenna groups are equal, bandwidths of the detection signals corresponding to the different antenna groups are equal. When the antenna array is applied to a detection device, for example, applied to a radar, distance resolutions of distance measurement performed by the detection device based on echo signals corresponding to the antenna groups in the plurality of antenna groups (namely, the antenna array) are equal. Therefore, distance resolutions of distance measurement based on the antenna groups in the plurality of antenna groups (namely, the antenna array) can be aligned. In this way, algorithm complexity of joint distance measurement based on the plurality of antenna groups (namely, the antenna array) can be further reduced, a distance measurement error is reduced, and distance measurement precision is improved.

In a possible implementation, third parameters of detection signals corresponding to different antenna groups are equal, and the third parameter is a product of a pulse width of the detection signal and the reference frequency of the detection signal. When the antenna array is applied to a detection apparatus, for example, applied to a radar or a detection device, if third parameters of detection signals corresponding to different antenna groups in the plurality of antenna groups (namely, the antenna array) are equal, digital-to-analog conversion is performed by using a digital-to-analog conversion rate that is in direct proportion to a reference frequency of a detection signal corresponding to each antenna group, to generate the detection signal corresponding to each antenna group. In this way, generation of the detection signal can be simplified.

Optionally, different antenna groups may have equal first parameters, equal second parameters, and qual third parameters.

Optionally, an antenna type of the first antenna or the second antenna is not limited in this embodiment of this application. For example, the antenna type may include a microstrip antenna, a patch antenna, and the like.

In a possible implementation, the first antenna includes at least one first array, and the first array includes at least one first array element.

In a possible implementation, the first array is a uniform linear array, a uniform planar array, or a uniform volume array.

It should be noted that, in this application, the uniform linear array means that array elements are distributed on one straight line, and adjacent array elements have equal spacings. The uniform planar array means that array elements are distributed on a plane, adjacent array elements have equal spacings in each of two directions that are perpendicular to each other in the plane, and the spacings may be the same or different in different directions. The uniform volume array means that array elements are distributed in three-dimensional space, and when being observed in each of three directions (for example, three directions: horizontal, vertical, and vertical) that are perpendicular to each other in the space, adjacent array elements have equal spacings, where the spacings may be the same or different in different directions.

In a possible implementation, quantities and/or arrangement manners of first array elements included in first antennas in different antenna groups are the same.

For example, quantities of first array elements included in first antennas in different antenna groups are the same; or quantities and arrangement manners of first array elements included in first antennas in different antenna groups are the same.

It should be noted that, in this application, arrangement manners of two arrays being the same means that a position relationship of array elements in the two arrays may be obtained by translating a position (including a one-dimensional, two-dimensional, or three-dimensional position) of each array element in one array. Optionally, a position of each array element in the other array may be further obtained through scaling, but rotation is not included.

In a possible implementation, when quantities and arrangement manners of first array elements included in first antennas in different antenna groups are the same, in the different antenna groups, a spacing between two first array elements in a first antenna in one antenna group is the same as a spacing between two first array elements at corresponding positions in a first antenna in another antenna group; or in the different antenna groups, a product of a spacing between two first array elements in a first antenna in one antenna group and a reference frequency of a detection signal corresponding to the antenna group is the same as a product of a spacing between two first array elements at corresponding positions in a first antenna in another antenna group and a reference frequency of a detection signal corresponding to the another antenna group.

In the different antenna groups, that a product of a spacing between two first array elements in a first antenna in one antenna group and a reference frequency of a detection signal corresponding to the antenna group is the same as a product of a spacing between two first array elements at corresponding positions in a first antenna in another antenna group and a reference frequency of a detection signal corresponding to the another antenna group means that an antenna size of a first antenna in a single antenna group is related to a reference frequency of a detection signal corresponding to the antenna group. To be specific, based on reference frequencies of detection signals corresponding to two different antenna groups, a first antenna in an antenna group may be proportionally scaled to obtain a first antenna in another antenna group. Therefore, transmit beams corresponding to different antenna groups in the plurality of antenna groups (namely, the antenna array) have a same shape. In this way, a joint distance measurement error caused by a shape difference between transmit beams corresponding to different antenna groups in the plurality of antenna groups (namely, the antenna array) can be reduced.

In the different antenna groups, that a spacing between two first array elements in a first antenna in one antenna group is the same as a spacing between two first array elements at corresponding positions in a first antenna in another antenna group means that antenna sizes of the first antennas in the different antenna groups are the same. Therefore, a shape similarity between transmit beams corresponding to different antenna groups in the plurality of antenna groups (namely, the antenna array) is high. In this way, a joint distance measurement error caused by a shape difference between transmit beams corresponding to different antenna groups in the plurality of antenna groups (namely, the antenna array) can be reduced. In addition, after the first antenna group is designed, other antenna groups of the antenna array, such as a second antenna group and a third antenna group, may be designed in an equal proportion according to a proportion relationship of a reference frequency. Such antenna is easier to be processed and produced, and this simplifies design of the antenna array.

In a possible implementation, the second antenna includes at least one second array, and the second array includes at least one second array element.

In a possible implementation, the second array is a uniform linear array or a uniform planar array.

In a possible implementation, quantities and/or arrangement manners of second array elements included in second antennas in different antenna groups are the same.

In a possible implementation, when quantities and arrangement manners of second arrays in different antenna groups are the same, in the different antenna groups, a spacing between two second array elements in a second antenna in one antenna group is the same as a spacing between two second array elements at corresponding positions in a second antenna in another antenna group; or in the different antenna groups, a product of a spacing between two second array elements in a second antenna in one antenna group and a reference frequency of an echo signal corresponding to the antenna group is the same as a product of a spacing between two second array elements at corresponding positions in a second antenna in another antenna group and a reference frequency of an echo signal corresponding to the another antenna group.

In the different antenna groups, that a product of a spacing between two second array elements in a second antenna in one antenna group and a reference frequency of an echo signal corresponding to the antenna group is the same as a product of a spacing between two second array elements at corresponding positions in a second antenna in another antenna group and a reference frequency of an echo signal corresponding to the another antenna group means that an antenna size of a second antenna in a single antenna group is related to a reference frequency of an echo signal corresponding to the antenna group. To be specific, based on reference frequencies of echo signals corresponding to two different antenna groups, a second antenna in an antenna group may be proportionally scaled to obtain a second antenna in another antenna group may be obtained. Therefore, receive beams and/or receive digitally formed beams corresponding to different antenna groups in the plurality of antenna groups (namely, the antenna array) have a same shape. In this way, an error of joint distance measurement based on a plurality of antenna groups caused by a shape difference between receive beams and/or receive digitally formed beams corresponding to the second antennas of the different antenna groups in the plurality of antenna groups (namely, the antenna array) can be reduced.

Further, in the different antenna groups, that a spacing between two second array elements in a second antenna in one antenna group is the same as a spacing between two second array elements at corresponding positions in a second antenna in another antenna group means that antenna sizes of the second antennas of the different antenna groups are the same, and shape similarity between receive beams and/or receive digitally formed beams corresponding to the second antennas of the different antenna groups in the plurality of antenna groups (namely, the antenna array) is high. In this way, an error of joint distance measurement based on a plurality of antenna groups caused by a shape difference between receive beams and/or receive digitally formed beams corresponding to the second antennas of the different antenna groups in the plurality of antenna groups (namely, the antenna array) can be reduced. In addition, after the second antenna in the first antenna group is designed, other antenna groups of the antenna array, such as a second antenna in a second antenna group and a second antenna in a third antenna group, may be designed in an equal proportion according to a proportion relationship of a reference frequency. Such second antenna is easier to be processed and produced, and this simplifies design of the antenna array.

According to a second aspect, this application further provides a detection device, including a processing apparatus and the antenna array according to the first aspect or the possible implementations of the first aspect. The processing apparatus is connected to the antenna array. The processing apparatus is configured to perform joint measurement on a detection target based on a plurality of echo signals corresponding to the antenna array, that is, measure the detection target by using a joint echo signal obtained by combining the echo signals of the plurality of antenna groups in the antenna array. The joint echo signal is a general term of the plurality of echo signals corresponding to the plurality of antenna groups, or may be understood as a broadband echo signal obtained by combining the echo signals corresponding to the plurality of antenna groups.

In a possible implementation, the processing apparatus is specifically configured to perform first processing on an echo signal corresponding to each of a plurality of antenna groups, to obtain a first processed signal, so as to perform joint measurement on the detection target, where the first processing includes analog-to-digital conversion processing and/or analog signal processing.

For example, the analog signal processing may include down-conversion processing, frequency mixing processing, and the like.

In a possible implementation, the processing apparatus is specifically configured to: perform digital signal processing on the first processed signal corresponding to each antenna group, to obtain a second processed signal; and perform joint measurement on the detection target based on a plurality of second processed signals corresponding to the plurality of antenna groups.

Optionally, the digital signal processing may include performing pulse compression processing in at least one of the following dimensions: a fast time dimension, a slow time dimension, an array element dimension of a second antenna, and an array element dimension of a first antenna.

For a specific structure and design of the antenna array in the detection device provided in the second aspect, refer to the descriptions in the first aspect. Therefore, for beneficial effect that can be achieved by the antenna array, refer to the beneficial effect described in the antenna array provided above. Details are not described herein again.

According to a third aspect, this application further provides a terminal, where the terminal includes the detection device according to the second aspect or the possible implementations of the second aspect.

Optionally, the terminal in this embodiment of this application may have a capability of implementing a communication function and/or a detection function through a radar. This is not limited in this embodiment of this application.

In a possible implementation, the terminal may be a vehicle, an uncrewed aerial vehicle, an uncrewed transport vehicle, a robot, or the like in self-driving or intelligent driving.

In another possible implementation, the terminal may be a mobile phone, a tablet computer, a computer with a wireless transceiver function, a virtual reality terminal, an augmented reality terminal, a wireless terminal in industrial control, a wireless terminal in unmanned driving, a wireless terminal in telemedicine, a wireless terminal in a smart grid, a wireless terminal in transportation safety, a wireless terminal in a smart city, a wireless terminal in a smart home, or the like.

### BRIEF DESCRIPTION OF DRAWINGS

FIG. 1 is a schematic diagram of an application scenario according to an embodiment of this application;
FIG. 2 is a schematic block diagram of a detection device 100 according to an embodiment of this application;
FIG. 3 is a schematic diagram (top view) of a structure of an antenna group according to an embodiment of this application;
FIG. 4 is a schematic diagram (top view) of another structure of an antenna group according to an embodiment of this application;
FIG. 5 is a schematic diagram of a frequency band of a detection signal according to an embodiment of this application;
FIG. 6 is a schematic diagram of another frequency band of a detection signal according to an embodiment of this application;
FIG. 7 is a schematic diagram of a bandwidth of a detection signal according to an embodiment of this application;
FIG. 8 is a schematic diagram of a reference frequency of a detection signal according to an embodiment of this application;
FIG. 9 is a schematic diagram of still another frequency band of a detection signal according to an embodiment of this application;
FIG. 10 is a schematic diagram of a structure of a first array according to an embodiment of this application;
FIG. 11 is a schematic diagram of a structure of a first antenna according to an embodiment of this application;
FIG. 12 is a schematic diagram of a structure of a uniform linear array according to an embodiment of this application;
FIG. 13 is a schematic diagram of a structure of a uniform planar array according to an embodiment of this application;
FIG. 14 is a schematic diagram of another structure of a first antenna according to an embodiment of this application; and
FIG. 15 is a schematic block diagram of a terminal 500 according to an embodiment of this application.

### DESCRIPTION OF EMBODIMENTS

The following describes technical solutions of this application with reference to accompanying drawings.

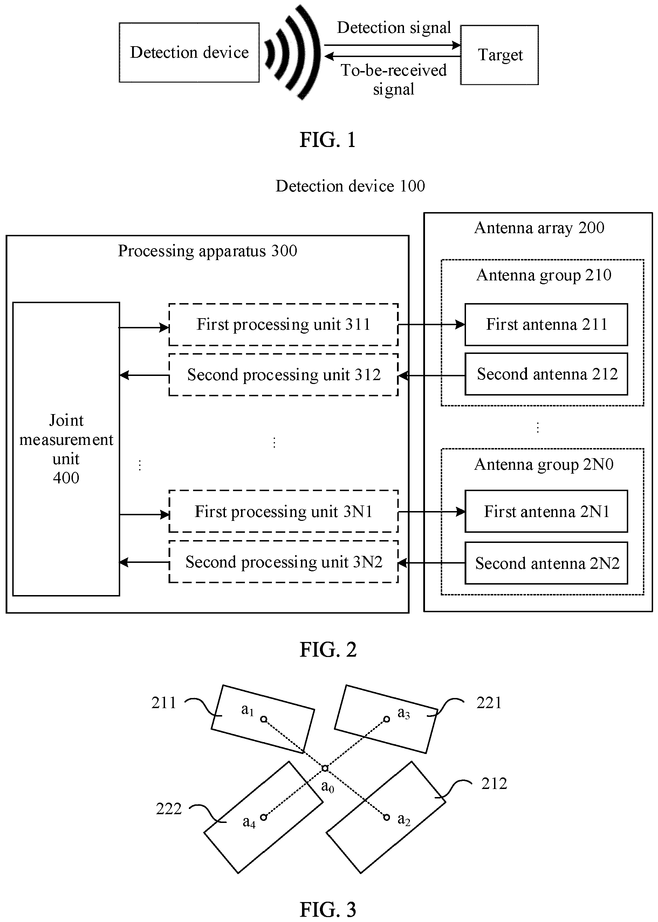

FIG. 1 is a schematic diagram of an application scenario according to an embodiment of this application. As shown in FIG. 1, a detection device transmits a detection signal, and receives an echo signal of the detection device. The echo signal is a signal obtained by reflecting the detection signal on a target detection object. The detection device may perform target detection based on the echo signal, for example, perform distance measurement, speed measurement, or positioning on the target detection object.

Optionally, the detection device may be applied to a scenario in which target detection is performed by using a detection signal in an application scenario, for example, unmanned driving, self-driving, intelligent driving, or network-connected driving.

For example, the detection device in this application may be a millimeter-wave radar, a lidar, an ultrasonic radar, or the like.

Optionally, the detection device in this application may be applied to a terminal. For example, the terminal may be a transportation tool or an intelligent device. The terminal may be a motor vehicle (for example, an uncrewed vehicle, an intelligent vehicle, an electric vehicle, a digital vehicle, or the like), an uncrewed aerial vehicle, a railcar, a bicycle, a traffic light, or the like. The terminal may be a mobile phone, a tablet computer, a notebook computer, a personal digital assistant, a point of sale terminal, an in-vehicle computer, an augmented reality device, virtual reality, a wearable device, an in-vehicle terminal, or the like.

A distance resolution of the radar is in proportion to an operating bandwidth of the radar. A larger operating bandwidth of the radar indicates a higher distance resolution. However, in actual use, limited by factors such as a size and costs of the radar, increasing a bandwidth of the radar with low complexity and low costs becomes an urgent problem to be resolved. An in-vehicle radar is used as an example. Due to reasons such as costs, a volume, a manufacturing process, and a process, a larger bandwidth of an analog device indicates a more serious problem of waveform non-ideality of the analog device, for example, a frequency modulation linearity of a linear frequency modulated continuous wave (FMCW) radar is poorer. Therefore, the bandwidth cannot be simply increased to improve the distance resolution. Similarly, due to costs, a volume, a manufacturing process, a process, and the like, a sampling rate of a digital-to-analog conversion device or an analog-to-digital conversion device and a processing capability of a digital circuit are limited.

The distance resolution of the radar is generally in direct proportion to the bandwidth of the radar. When the operating bandwidth of an antenna is limited, the distance resolution of the radar is also limited. As a result, the distance resolution of the radar is low, and distance measurement precision is low. An embodiment of this application provides an antenna array, including a plurality of antenna groups. Different antenna groups support different sub operating frequency bands. A size of an antenna in a first antenna group in different antenna groups may be obtained by directly scaling a size of a corresponding antenna in a second antenna group, thereby reducing antenna design complexity. When the antenna array is applied to a detection device, for example, a radar, joint processing is performed on received (echo) signals of antenna groups of different operating frequency bands, so that the antenna array is equivalent to a broadband detection device, and a distance resolution of the detection device can be improved, thereby improving distance measurement precision of the detection device. When the antenna array or the detection device is applied to a terminal, a sensing capability of the terminal can be improved.

FIG. 2 is a schematic block diagram of a detection device 100 according to an embodiment of this application. The detection device 100 may include an antenna array 200 and a processing apparatus 300. The antenna array 200 may include a plurality of antenna groups (for example, an antenna group 210, ..., and an antenna group 2N0 shown in FIG. 2, where N is an integer greater than 1, that is, there are N antenna groups). Each of the plurality of antenna groups may include a first antenna and a second antenna (for example, the antenna group 210 shown in FIG. 2 includes a first antenna 211 and a second antenna 212, ..., and the antenna group 2N0 includes a first antenna 2N1 and a second antenna 2N2). The processing apparatus 300 is separately connected to the plurality of first antennas (for example, the first antenna 211, ..., and the first antenna 2N1 shown in FIG. 2) and the plurality of second antennas (for example, the second antenna 212, ..., and the first antenna 2N2 shown in FIG. 2).

The first antenna in each antenna group is configured to transmit a detection signal.

The second antenna in each antenna group is configured to: receive an echo signal of the detection signal, and send the echo signal to a joint measurement unit.

The processing apparatus 300 is configured to perform joint processing based on a plurality of echo signals corresponding to the plurality of antenna groups. A joint echo signal is a general term of the plurality of echo signals corresponding to the plurality of antenna groups. It may be understood that the joint echo signal is a broadband echo signal obtained by combining echo signals corresponding to different antenna groups.

It should be noted that the detection signal corresponding to the antenna group in this application may be understood as a detection signal transmitted by a first antenna in the antenna group, the echo signal corresponding to the antenna group may be understood as an echo signal received by a second antenna in the antenna group, and the echo signal is an echo signal corresponding to the detection signal by default. When the antenna array is used for a terminal (for example, a tablet), the detection signal may be replaced with a transmit signal, and the echo signal may be replaced with a receive signal.

Optionally, the processing apparatus 300 may include a plurality of first processing units (a first processing unit 311, ..., a first processing unit 3N1, namely, N first processing units shown in FIG. 2), a plurality of second processing units (a second processing unit 312, ..., a second processing unit 3N2, namely, N second processing units shown in FIG. 2), and a joint measurement unit 400. The processing apparatus 300 is connected to the plurality of first antennas by using the plurality of first processing units (for example, the first processing unit 311 shown in FIG. 2 is connected to the first antenna 211, ..., and the first processing unit 3N1 is connected to the first antenna 2N1), and the processing apparatus 300 is connected to the plurality of second antennas by using the plurality of second processing units (for example, the second processing unit 312 shown in FIG. 2 is connected to the second antenna 212, ..., and the second processing unit 3N2 is connected to the second antenna 2N2). The joint measurement unit 400 is separately connected to the plurality of first processing units and the plurality of second processing units.

The first processing unit corresponding to the first antenna in each antenna group is configured to provide a detection signal for the first antenna, and control the first antenna to transmit the detection signal.

The second processing unit corresponding to the second antenna in each antenna group is configured to: control the second antenna to receive an echo signal of the detection signal; perform first processing on the echo signal to obtain a first processed signal, where the first processing includes analog-to-digital conversion processing and/or analog signal processing; and send the first processed signal to the joint measurement unit.

For example, the analog signal processing may include down-conversion processing, frequency mixing processing, and the like.

The joint measurement unit 400 is configured to perform joint distance measurement based on the first processed signals corresponding to the plurality of antenna groups.

In a possible implementation, the joint measurement unit 400 is specifically configured to: perform digital signal processing on the first processed signal corresponding to each antenna group, to obtain a second processed signal; and perform joint measurement based on a plurality of second processed signals corresponding to the plurality of antenna groups.

It should be noted that the plurality of second processed signals corresponding to the plurality of antenna groups in this embodiment of this application may be equivalently understood as processing signals corresponding to the antenna array.

According to the antenna array described in this application, the antenna array includes a plurality of antenna groups, and different antenna groups are connected to different processing units. In this way, a function of the broadband detection device is implemented while a requirement for a broadband of the processing unit is reduced. In other words, a plurality of processing units with relatively narrow operating bandwidths may work together by using a joint measurement unit, and may be equivalent to a broadband processing unit, thereby implementing the broadband detection device and improving detection performance of the detection device.

In a possible implementation, the digital signal processing may include: performing pulse compression on the first processed signal in a fast time dimension, to convert the fast time dimension into a low-resolution and wide-range distance dimension, so as to obtain a distance spectrum (or referred to as a low-resolution distance spectrum) of a single antenna group, namely, the second processed signal, for target distance measurement.

In another possible implementation, the digital signal processing may include: performing pulse compression on the first processed signal in a slow time dimension, to convert the slow time dimension into a speed dimension (or referred to as a Doppler dimension), so as to obtain a speed spectrum (or referred to as a Doppler spectrum) of a single antenna group, namely, the second processed signal, for target speed measurement.

In still another possible implementation, the digital signal processing may include: performing pulse compression on the first processed signal in an array element dimension of a second antenna in a respective antenna group, to convert the array element dimension of the second antenna into an angle dimension, so as to obtain an angle spectrum of a single antenna group, namely, the second processed signal, for target angle measurement.

In yet another possible implementation, if an array element of a first antenna in each antenna group transmits a detection signal in a time division, frequency division, or code division manner, a second processing unit (or the joint measurement unit) corresponding to a second antenna in each antenna group may separate, from echo signals corresponding to the respective antenna groups, some signals corresponding to detection signals transmitted by different array elements in the first antennas of the respective antenna groups. The digital signal processing may include: performing pulse compression on the first processed signal in an array element dimension of the first antenna in each antenna group, to convert the array element dimension of the first antenna into an angle dimension, so as to obtain an angle spectrum of a single antenna group, namely, the second processed signal, for target angle measurement. Alternatively, the digital signal processing may include: performing joint pulse compression on the first processed signal in an array element dimension of the first antenna and an array element dimension of the second antenna in each antenna group, to convert the array element dimension of the first antenna and the array element dimension of the second antenna into an angle dimension, so as to obtain an angle spectrum of a single antenna group, namely, the second processed signal, for target angle measurement.

Optionally, the digital signal processing may include: performing pulse compression on the first processed signal in at least two dimensions of the fast time dimension, the slow time dimension, the array element dimension of the second antenna, the array element dimension of the first antenna, and the array element dimension of the first antenna and the array element dimension of the second antenna (a pulse compression sequence of the dimensions is not limited). This is not limited in this application.

For example, the digital signal processing may include: sequentially performing pulse compression on the first processed signal in the fast time dimension and the slow time dimension, to convert the fast time dimension into the low-resolution and wide-range distance dimension, and convert the slow time dimension into the speed dimension, so as to obtain a distance (or low-resolution and wide-range distance)-speed (or Doppler) spectrum of a single antenna group, namely, the second processed signal, for target distance measurement and speed measurement.

For example, the digital signal processing may include: sequentially performing pulse compression on the first processed signal in the fast time dimension, the slow time dimension, and the array element dimension of the second antenna, to convert the fast time dimension into the low-resolution and wide-range distance dimension, convert the slow time dimension into the speed dimension, and convert the array element dimension of the second antenna into the angle dimension, so as to obtain a distance (or low-resolution and wide-range distance)-speed (or Doppler)-angle spectrum of a single antenna group, namely, the second processed signal, for target distance measurement, speed measurement, and angle measurement.

Optionally, a physical quantity measured by the joint measurement unit through joint measurement includes distance measurement, angle measurement, speed measurement, and the like. This is not limited in this application.

In a possible implementation, joint distance measurement is used as an example. The joint measurement unit 400 may perform, in a reference frequency dimension corresponding to the antenna array, pulse compression on a joint distance spectrum including low-resolution distance spectrums corresponding to antenna groups in the plurality of antenna groups, to convert the reference frequency dimension corresponding to the antenna array into a high-resolution and small-range distance dimension, so as to obtain a high-resolution distance-low-resolution distance spectrum; extract a target from the high-resolution distance-low-resolution distance spectrum, and determine, in the high-resolution distance-low-resolution distance spectrum, a low-resolution wide-range distance reading and a high-resolution small-range reading that correspond to the target; and obtain a high-resolution wide-range distance measurement result of the target with reference to the low-resolution wide-range distance reading and the high-resolution small-range distance reading that correspond to the target.

It should be noted that the foregoing describes only an example in which joint distance measurement is performed based on a joint distance spectrum including distance spectrums corresponding to the antenna groups in the plurality of antenna groups (namely, the antenna array). However, this application is not limited thereto.

For example, the joint measurement unit 400 may further perform joint measurement in a manner similar to the foregoing manner based on a joint distance spectrum including other distance spectrums (for example, distance-speed spectrums, distance-angle spectrums, distance-speed-angle spectrums, or the like) corresponding to the antenna groups in the plurality of antenna groups. Details are not described herein again.

For example, the joint measurement unit 400 may further extract a complex number corresponding to a target from the distance spectrum corresponding to each antenna group in the plurality of antenna groups, and perform, in the reference frequency dimension corresponding to the antenna array, pulse compression on a complex array including the complex numbers corresponding to the targets extracted from the plurality of antenna groups, to convert the reference frequency dimension corresponding to the antenna array into a high-resolution small-range distance dimension, to obtain a high-resolution distance spectrum corresponding to the target; determine, in the high-resolution distance spectrum, a high-resolution small-range distance reading corresponding to the target, and in the low-resolution distance spectrum, a low-resolution wide-range distance reading corresponding to the target; and obtain a high-resolution wide-range distance measurement result of the target with reference to the low-resolution wide-range distance reading and the high-resolution small-range distance reading that correspond to the target.

Optionally, the joint measurement unit 400 may perform joint speed measurement based on various speed spectrums corresponding to the antenna groups in the plurality of antenna groups by using a similar method, or may perform joint angle measurement based on various angle spectrums corresponding to the antenna groups in the plurality of antenna groups by using a similar method. This is not limited in this embodiment of this application.

It should be noted that, in the plurality of antenna groups, frequency bands of detection signals corresponding to at least two antenna groups do not completely overlap. For example, the antenna group 210 supports sending of a detection signal whose band is 71.5 GHz to 73 GHz and receiving of a corresponding echo signal (that is, an operating band of the antenna group 210 is 71.5 GHz to 73 GHz). The antenna group 220 supports sending of a detection signal whose band is 73 GHz to 74 GHz and receiving of a corresponding echo signal (that is, an operating band of the antenna group 220 is 73 GHz to 74 GHz). The antenna group 230 supports sending of a detection signal whose band is 73.5 GHz to 75 GHz and receiving of a corresponding echo signal (that is, an operating band of the antenna group 230 is 73.5 GHz to 75 GHz). The antenna group 240 supports sending of a detection signal whose band is 75.1 GHz to 76 GHz and receiving of a corresponding echo signal (that is, an operating band of the antenna group 240 is 75.1 GHz to 76 GHz). That is, the operating band of the antenna group 210 overlaps the operating band of the antenna group 220 at a frequency of 73 GHz, the operating band of the antenna group 220 overlaps the operating band of the antenna group 230 at 73.5 GHz to 74 GHz, and the operating band of the antenna group 240 and the operating band of the antenna group 210 do not overlap. That is, the antenna array 200 supports sending of a detection signal whose band is 71.5 GHz to 76 GHz and receiving of a corresponding echo signal.

Optionally, center points of the plurality of antenna groups are the same, that is, distance measurement reference points of the plurality of antenna groups are the same. In this way, joint measurement is performed on a joint echo signal corresponding to the plurality of antenna groups.

It should be noted that, in this application, a center point of a single antenna group is a reference point used by the antenna group for distance measurement. In other words, when distance measurement is performed on a target by using the antenna group, a distance between the target and the center point of the antenna group is measured.

It should be further noted that, in this embodiment of this application, the center points being the same includes the center points being completely the same and being approximately the same, where the center points being approximately the same means that a difference between the center points of the antenna groups is within a specific error range. The error range is an error that may exist in industrial manufacturing, an error that is allowed to exist in a structure design, or the like. The error range is not specifically limited herein.

In a possible implementation, a center point of a single antenna group may be a midpoint between a reference point corresponding to a first antenna in the antenna group and a reference point corresponding to a second antenna in the antenna group.

Optionally, a position of the reference point corresponding to the first antenna or the reference point corresponding to the second antenna is not limited in this application. For example, the reference point of the first antenna may be a center of the first antenna, a center of gravity of the first antenna, or any position of the first antenna.

Optionally, a first antenna and a second antenna in a same antenna group may be a same antenna, that is, an antenna that transmits a detection signal and an antenna that receives an echo signal in the antenna group are a same antenna, and a reference point corresponding to the first antenna and a reference point corresponding to the second antenna in the antenna group are a same reference point.

For example, the N antenna groups include the antenna group 210 and the antenna group 220, the antenna group 210 includes the first antenna 211 and the second antenna 212, the antenna group 220 includes the first antenna 221 and the second antenna 222, and a reference point corresponding to an antenna (including the first antenna and the second antenna) is a center of the antenna. FIG. 3 is a schematic diagram (top view) of a structure of the N antenna groups according to an embodiment of this application. As shown in FIG. 3, a reference point corresponding to the first antenna 211 is a₁, a reference point corresponding to the second antenna 212 is a₂, a reference point corresponding to the first antenna 221 is a₃, and a reference point corresponding to the second antenna 222 is a₄. A center point between a₁ and a₂ and a center point between a₃ and a₄ are both a₀, that is, center points of the antenna group 210 and the antenna group 220 are both a₀.

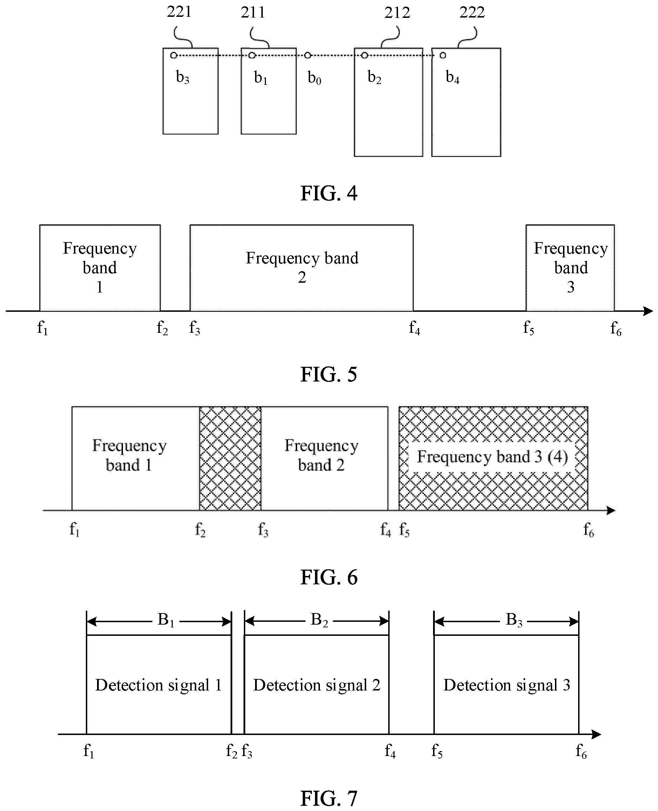

For example, the N antenna groups include the antenna group 210 and the antenna group 220, the antenna group 210 includes the first antenna 211 and the second antenna 212, the antenna group 220 includes the first antenna 221 and the second antenna 222, and a reference point corresponding to an antenna is an array element in a first row and a first column of an array element array. FIG. 4 is a schematic diagram (top view) of another structure of the N antenna groups according to an embodiment of this application. As shown in FIG. 4, a reference point corresponding to the first antenna 211 is b₁, a reference point corresponding to the second antenna 212 is b₂, a reference point corresponding to the first antenna 221 is b₃, and a reference point corresponding to the second antenna 222 is b₄. A center point between b₁ and b₂ and a center point between b₃ and b₄ are both b₀, that is, center points of the antenna group 210 and the antenna group 220 are both b₀.

It should be noted that, that the frequency bands in this application do not completely overlap may include that the frequency bands do not overlap or partially overlap. In other words, frequency bands of detection signals corresponding to at least two antenna groups in the plurality of antenna groups do not overlap or partially overlap. A relationship between a frequency band of a detection signal corresponding to an antenna group other than the at least two antenna groups in the plurality of antenna groups and a frequency band of a detection signal corresponding to any one of the at least two antenna groups is not limited in this application, that is, the frequency bands may completely overlap, partially overlap, or do not overlap.

For example, the N first antennas include the first antenna 211, the first antenna 221, and a first antenna 231. FIG. 5 is a schematic diagram of a frequency band of a detection signal according to an embodiment of this application. As shown in FIG. 5, a frequency band of a detection signal 1 transmitted by the first antenna 211 may be f₁ to f₂ (namely, a frequency band 1), a frequency band of a detection signal 2 transmitted by the first antenna 221 may be f₃ to f₄ (namely, a frequency band 2), and a frequency band of a detection signal 3 transmitted by the first antenna 231 may be f₅ to f₆ (namely, a frequency band 3), where f₃>f₂, and f₅>f₄. It can be learned from FIG. 5 that the frequency band 1, the frequency band 2, and the frequency band 3 do not overlap.

For example, the N first antennas include the first antenna 211, the first antenna 221, the first antenna 231, and a first antenna 241. FIG. 6 is a schematic diagram of another frequency band of a detection signal according to an embodiment of this application. As shown in FIG. 6, a frequency band of a detection signal 1 transmitted by the first antenna 211 may be f₁ to f₃ (namely, a frequency band 1), a frequency band of a detection signal 2 transmitted by the first antenna 221 may be f₂ to f₄ (namely, a frequency band 2), a frequency band of a detection signal 3 transmitted by the first antenna 231 may be f₅ to f₆ (namely, a frequency band 3), and a frequency band of a detection signal 4 transmitted by the first antenna 241 may be fs to f₆ (namely, a frequency band 4), where f₃>f₂, and f₅>f₄. It can be learned from FIG. 6 that the frequency band 1 and the frequency band 2 partially overlap, the frequency band 2 and the frequency band 3 do not overlap, and the frequency band 3 and the frequency band 4 completely overlap. An overlapping part between the frequency bands is shown by a shadow part in FIG. 6.

In this application, in the plurality of antenna groups, frequency bands of detection signals corresponding to at least two antenna groups do not completely overlap. In this way, a joint operating bandwidth of the plurality of antenna groups is greater than an operating bandwidth of a single antenna group. When the plurality of antenna groups work jointly, the antenna array may support broadband operating, that is, antenna groups with narrow operating frequency bands may work jointly, so that antenna groups with different sub-bandwidths are spliced into a broadband antenna array. In this way, a broadband antenna array is implemented.

In a possible implementation, in the plurality of antenna groups, frequency bands of detection signals corresponding to at least two antenna groups partially overlap.

It can be learned from the foregoing description that an operating bandwidth of a radar is in direct proportion to a distance resolution, that is, a larger operating bandwidth indicates a higher distance resolution. When the broadband antenna array is applied to a detection device, for example, applied to a radar, a distance resolution of joint distance measurement performed by the detection device by using a joint echo signal corresponding to the plurality of antenna groups (namely, the antenna array) is greater than a distance resolution of distance measurement performed by using an echo signal corresponding to a single antenna group. In other words, a distance resolution of distance measurement based on the single antenna group is usually less than a distance resolution of joint distance measurement based on the plurality of antenna groups (namely, the antenna array).

In addition, for joint distance measurement based on an antenna array, a reference frequency interval between detection signals of adjacent reference frequencies is usually in inverse proportion to a distance measurement range of joint distance measurement performed by the antenna array. That is, a larger reference frequency interval indicates a smaller distance measurement range of joint distance measurement performed by the antenna array. Usually, the reference frequency interval and a bandwidth of a single antenna group are in a same order of magnitude. When the antenna array is applied to a detection device, for example, applied to a radar, a distance measurement range of joint distance measurement performed by the detection device by using the joint echo signal corresponding to the plurality of antenna groups and a distance resolution of distance measurement performed by the detection device by using an echo signal corresponding to a single antenna group are in a same order of magnitude. However, a distance measurement range of distance measurement based on the single antenna group is usually greater than the distance resolution of distance measurement based on the single antenna group. Therefore, the distance measurement range of distance measurement based on the single antenna group is usually greater than the distance measurement range of joint distance measurement based on the plurality of antenna groups (namely, the antenna array).

In conclusion, the distance measurement based on a single antenna group has features of a high distance measurement range and a low distance resolution, and the joint distance measurement based on the antenna array (namely, the plurality of antenna groups) has features of a low distance measurement range and a high distance resolution. Therefore, the distance measurement features of the single antenna group and the joint distance measurement feature of the plurality of antenna groups are combined, so that the detection device can implement a distance measurement capability with a high range and a high distance resolution.

Based on the foregoing description, if frequency bands of detection signals corresponding to at least two antenna groups in the antenna array partially overlap, a reference frequency interval between the detection signals corresponding to the at least two antenna groups may be less than a bandwidth of a detection signal corresponding to a single antenna group. When the broadband antenna array is applied to a detection device, for example, applied to a radar, a distance measurement range of joint distance measurement performed by the detection device by using the joint echo signal corresponding to the plurality of antenna groups may be greater than a distance resolution of distance measurement performed by the detection device by using the echo signal corresponding to the single antenna group. In this way, for a point target, a distance measurement result of distance measurement based on the single antenna group and a distance measurement result of joint distance measurement based on the antenna array (namely, the plurality of antenna groups) are combined, so that a high-distance-resolution distance measurement result may be obtained within a distance measurement range of the single antenna group, thereby reducing a problem of distance blur caused because the distance resolution of distance measurement based on the single antenna group is greater than the distance measurement range of joint distance measurement based on the antenna array (namely, the plurality of antenna groups).

Optionally, the reference frequency of the detection signal in this application may be a center frequency, a carrier frequency, a lowest frequency, or a highest frequency of the detection signal. This is not limited in this embodiment of this application.

For example, a distance measurement range of a single antenna group is 100 meters, a distance resolution is 0.5 meters, and a distance measurement range of the N antenna groups is 1 meter, and a distance resolution is 0.01 meters. If a real target is at a place of 55.3 meters, through joint distance measurement based on the N antenna groups, that the real target is at a place at 0.30 to 0.31 meters within the distance measurement range, that is, an actual distance is between (M×1+0.30) meters and (M×1+0.31) meters (M is an integer greater than 0). Through distance measurement based on the single antenna, that the target is at a place between 55 meters and 55.5 meters in the distance measurement range is obtained. Therefore, it may be determined, based on a joint distance measurement result of the N antenna groups and a distance measurement result of the single antenna group, that a value of M is 55, and it may be further learned that the target is at a place between (55×1+0.30) and (55×1+0.31) meters, that is, 55.3 to 55.31 meters.

In a possible implementation, bandwidths of detection signals corresponding to different antenna groups are equal. In this way, when the antenna array is applied to a detection device, for example, applied to a radar, antenna groups in the plurality of antenna groups (namely, the antenna array) correspond to a same distance resolution, so that algorithm complexity of joint distance measurement based on the antenna array (namely, the plurality of antenna groups) can be reduced, and an error can be reduced.

For example, the N first antennas include the first antenna 211, the first antenna 221, and the first antenna 231. FIG. 7 is a schematic diagram of a bandwidth of a detection signal according to an embodiment of this application. As shown in FIG. 7, a bandwidth B₁ of a detection signal 1 transmitted by the first antenna 211 is equal to f₂-f₁, a bandwidth B₂ of a detection signal 2 transmitted by the first antenna 221 is equal to f₄-f₃, and a bandwidth B₃ of a detection signal 3 transmitted by the first antenna 231 is equal to f₆-f₅, where B₁=B₂=B₃.

In a possible implementation, reference frequencies of detection signals corresponding to different antenna groups are distributed at an equal interval. That is, reference frequency intervals between detection signals of adjacent reference frequencies are equal. In this way, when the antenna array is applied to a detection device, for example, applied to a radar, when the detection device performs distance measurement based on the joint echo signal corresponding to the antenna array, that is, performs joint distance measurement based on the joint echo signal corresponding to the plurality of antenna groups, the detection device may perform pulse compression on echo signals of different antenna groups according to a discrete Fourier transform algorithm, so that a joint distance measurement algorithm can be further simplified.

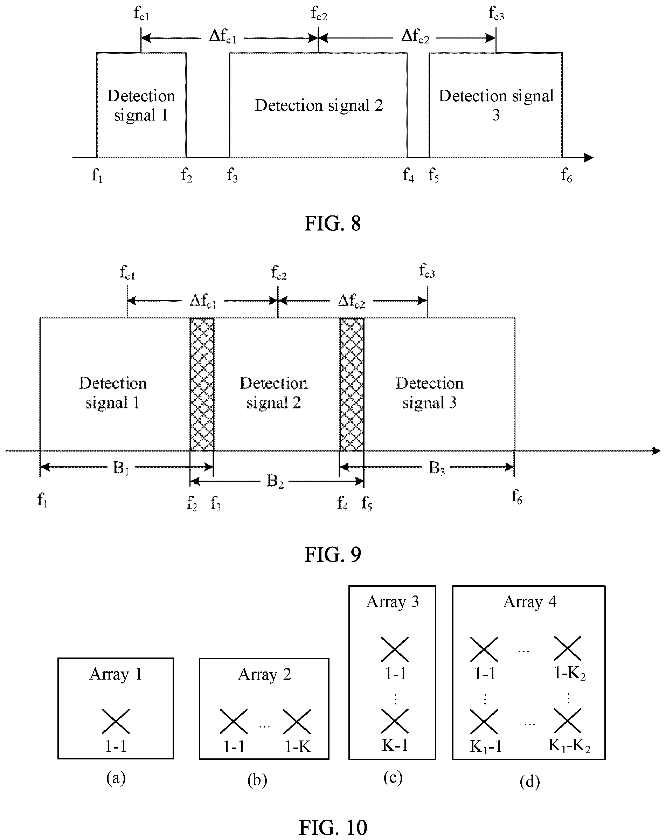

For example, the N first antennas include the first antenna 211, the first antenna 221, and the first antenna 231, and a reference frequency is a center frequency. FIG. 8 is a schematic diagram of a reference frequency of a detection signal according to an embodiment of this application. As shown in FIG. 8, a reference frequency f_{c1} of a detection signal 1 transmitted by the first antenna 211 is equal to (f₂+f₁)/2, a reference frequency f_{c2} of a detection signal 2 transmitted by the first antenna 221 is equal to (f₄+f₃)/2, and a reference frequency f_{c3} of a detection signal 3 transmitted by the first antenna 231 is equal to (f₆+f₅)/2. An interval Δf_{c1} between the reference frequency f_{c1} of the detection signal 1 and the reference frequency f_{c2} of the detection signal 2 is equal to f_{c2}-f_{c1}, and an interval Δf_{c2} between the reference frequency f_{c2} of the detection signal 2 and the reference frequency f_{c3} of the detection signal 3 is equal to f_{c3}-f_{c2}, where Δf_{c1}=Δf_{c2}.

Optionally, detection signals corresponding to different antenna groups satisfy one or more of the following: Frequency bands do not completely overlap, bandwidths are equal, and reference frequencies are distributed at an equal interval.

For example, the N first antennas include the first antenna 211, the first antenna 221, and the first antenna 231, and a reference frequency is a center frequency. FIG. 9 is a schematic diagram of another frequency band of a detection signal according to an embodiment of this application. As shown in FIG. 9, a frequency band of a detection signal 1 transmitted by the first antenna 211 may be f₁ to f₃, a frequency band of a detection signal 2 transmitted by the first antenna 221 may be f₂ to f₅, and a frequency band of a detection signal 3 transmitted by the first antenna 231 may be f₄ to f₆, where f₃>f₂, and f₅>f₄. A bandwidth B₁ of the detection signal 1 is equal to f₃-f₁, a bandwidth B₂ of the detection signal 2 is equal to f₅-f₂, and a bandwidth B₃ of the detection signal 3 is equal to f₆-f₄, where B₁=B₂=B₃. A reference frequency f_{c1} of the detection signal 1 is equal to (f₃+f₁)/2, a reference frequency f_{c2} of the detection signal 2 is equal to (f₅+f₂)/2, and a reference frequency f_{c3} of the detection signal 3 is equal to (f₆+f₄)/2. An interval Δf_{c1} between the reference frequency f_{c1} of the detection signal 1 and the reference frequency f_{c2} of the detection signal 2 is equal to f_{c2}-f_{c1}, and an interval Δf_{c2} between the reference frequency f_{c2} of the detection signal 2 and the reference frequency f_{c3} of the detection signal 3 is equal to f_{c3}-f_{c2}, where Δf_{c1}=Δf_{c2}.

In a possible implementation, first parameters of detection signals corresponding to different antenna groups are equal, and the first parameter is a product of a pulse repetition cycle of the detection signal and a reference frequency of the detection signal.

When the antenna array is applied to a detection device, for example, applied to a radar, a speed measurement range of the detection device is in direct proportion to a pulse repetition cycle of the detection signal, and is in direct proportion to a reference frequency of the detection signal. Therefore, the first parameter is to establish a relationship between a transmit waveform of the detection signal and a reference frequency of the detection signal. When first parameters of detection signals corresponding to different antenna groups in the plurality of antenna groups (namely, the antenna array) are equal, different antenna groups correspond to a same speed measurement range. Further, if echo signals corresponding to different antenna groups in the plurality of antenna groups (namely, the antenna array) have a same quantity of pulses, that is, speed resolutions corresponding to speed measurement based on the different antenna groups are equal, when pulse compression is performed on speed spectrums of the plurality of echo signals corresponding to the plurality of antenna groups (namely, the antenna array) in the reference frequency dimension corresponding to the antenna array, it is easier to establish a correspondence between speed spectrums of the echo signals corresponding to the different antenna groups in the plurality of antenna groups (namely, the antenna array). In this way, a joint distance measurement algorithm is simplified.

In a possible implementation, third parameters of detection signals corresponding to different antenna groups are equal, and the third parameter is a product of a pulse width (pulse width) of the detection signal and the reference frequency of the detection signal. When the antenna array is applied to a detection apparatus, for example, applied to a radar or a detection device, if third parameters of detection signals corresponding to different antenna groups in the plurality of antenna groups (namely, the antenna array) are equal, digital-to-analog conversion is performed by using a digital-to-analog conversion rate that is in direct proportion to a reference frequency of a detection signal corresponding to each antenna group, to generate the detection signal corresponding to each antenna group. In this way, generation of the detection signal can be simplified.

In a possible implementation, second parameters of different antenna groups are equal, and the second parameter is a product of the reference frequency of the detection signal and a sampling interval of the echo signal, or the second parameter may be a ratio of a reference wavelength of the detection signal to a sampling interval of the echo signal.

The detection device needs to perform, in a reference frequency dimension of the detection signal corresponding to the antenna group, pulse compression on a joint distance spectrum including distance spectrums (namely, a low-resolution wide-range distance spectrum obtained through pulse compression performed on echo signals corresponding to the antenna groups in the fast time dimension) of the echo signals corresponding to the plurality of antenna groups (namely, the antenna array), to implement joint distance measurement. Therefore, when the antenna array is applied to a detection device, for example, applied to a radar, second parameters of different antenna groups are equal, so that coupling between a reference frequency dimension corresponding to the antenna array and a distance dimension corresponding to a single antenna group can be avoided. In other words, second parameters of different antenna groups are equal, so that coupling between the reference frequency dimension corresponding to the antenna array and a low-resolution wide-range distance dimension can be avoided. If the reference frequency dimension corresponding to the antenna array and the distance dimension corresponding to the single antenna group are coupled, the detection device cannot separately perform pulse compression on the two dimensions. In other words, if the reference frequency dimension corresponding to the antenna array and the low-resolution wide-range distance dimension are coupled, the detection device cannot separately perform pulse compression on the two dimensions. In other words, second parameters of different antenna groups are equal, so that pulse compression can be separately performed on the two dimensions. In this way, in a joint distance measurement algorithm based on the plurality of antenna groups (namely, the antenna array), a correction algorithm for approximately eliminating coupling does not need to be performed, thereby simplifying a joint distance measurement algorithm, and avoiding an error caused because the correction algorithm cannot completely eliminate a coupling term.

In a possible implementation, when the detection signal is a linear frequency modulated continuous wave, if frequency modulation slopes of detection signals corresponding to different antenna groups are in direct proportion to reference frequencies of the detection signals, and second parameters corresponding to the different antenna groups are equal, when the antenna array is applied to a detection device, for example, applied to a radar, distance measurement ranges for the detection device to perform distance measurement based on echo signals corresponding to the antenna groups in the plurality of antenna groups (namely, the antenna array) are equal. Therefore, distance measurement ranges of distance measurement based on the antenna groups in the plurality of antenna groups (namely, the antenna array) can be aligned. In this way, algorithm complexity of joint distance measurement based on the plurality of antenna groups (namely, the antenna array) can be reduced, a distance measurement error is reduced, and distance measurement precision is improved.

In addition, if frequency modulation slopes of detection signals corresponding to different antenna groups are in direct proportion to reference frequencies of the detection signals, and third parameters of the detection signals corresponding to the different antenna groups are equal, bandwidths of the detection signals corresponding to the different antenna groups are equal. When the antenna array is applied to a detection device, for example, applied to a radar, distance resolutions of distance measurement performed by the detection device based on echo signals corresponding to the antenna groups in the plurality of antenna groups (namely, the antenna array) are equal. Therefore, distance resolutions of distance measurement based on the antenna groups in the plurality of antenna groups (namely, the antenna array) can be aligned. In this way, algorithm complexity of joint distance measurement based on the plurality of antenna groups (namely, the antenna array) can be further reduced, a distance measurement error is reduced, and distance measurement precision is improved.

Optionally, different antenna groups may have equal first parameters and equal third parameters.

Optionally, an antenna type of the first antenna or the second antenna is not limited in this embodiment of this application. For example, the antenna type may include a microstrip antenna, a patch antenna, and the like.

The following further describes structures of the first antenna and the second antenna.

In a possible implementation, the first antenna may include at least one first array, and the first array includes at least one first array element.

In other words, the first antenna may include one first array (that is, a single array) or at least two first arrays (that is, an array group). The first array may include one first array element (that is, a single-array element array) or at least two first array elements (that is, a multi-array element array).

In a possible implementation, the antenna group 210 in the N antenna groups is used as an example. The antenna group 210 includes the first antenna 211, and the first antenna 211 includes one first array (that is, a single array). FIG. 10 is a schematic diagram of a structure of the first array.

For example, the first array may be an array 1 shown in (a) in FIG. 10. The array 1 includes an array element 1-1. The array element 1-1 is arranged in one row and one column.

For example, the first array may be an array 2 shown in (b) in FIG. 10. The array 2 includes K array elements, namely, an array element 1-1, ..., and an array element 1-K. The K array elements are arranged in one row and K columns, where K>0.

For example, the first array may be an array 3 shown in (c) in FIG. 10. The array 3 includes K array elements, namely, an array element 1-1, ..., and an array element 1-K. The K array elements are arranged in K rows and one column, where K>0.

For example, the first array may be an array 4 shown in (d) in FIG. 10. The array 4 includes K array elements, namely, an array element 1-1, ..., an array element 1-K₂, ..., an array element Ki-1, ..., and an array element K₁-K₂. The K array elements are arranged in K₁ rows and K₂ columns, where K₁>1, K₂>1, and K₁+K₂=K.

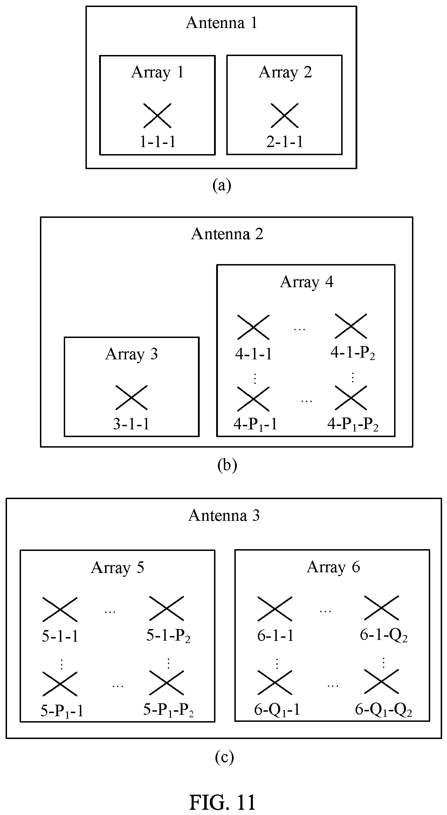

In another possible implementation, the antenna group 210 in the N antenna groups is used as an example. The antenna group 210 may include the first antenna 211. The first antenna 211 includes at least two first arrays (that is, an array group). The first array may include one first array element (that is, a single-array element array) or at least two first array elements (that is, a multi-array element array). FIG. 11 is a schematic diagram of a structure of the first antenna 211.

For example, the first antenna 211 may be an antenna 1 shown in (a) in FIG. 11. The antenna 1 includes an array 1 and an array 2. The array 1 includes one array element, namely, an array element 1-1-1, and the array 2 includes one array element, namely, an array element 2-1-1. In other words, the first antenna 211, namely, the antenna 1, may include two single-array element arrays. In this case, it may be understood as that the antenna 1 includes one multi-array element array.

For example, the first antenna 211 may be an antenna 2 shown in (b) in FIG. 11. The antenna 2 includes an array 3 and an array 4. The array 3 includes one array element, namely, an array element 3-1-1, and the array 4 includes P array elements, namely, an array element 4-1-1, ..., an array element 4-1-P₂, ..., an array element 4-P₁-1, ..., and an array element 4-P₁-P₂. The P array elements may be arranged in Pi rows and P₂ columns, where P₁>0, P₂>0, and P₁+P₂=P. In other words, the antenna 2 may include one single-array element array and one multi-array element array.

For example, the first antenna 211 may be an antenna 3 shown in (c) in FIG. 11. The antenna 3 includes an array 5 and an array 6. The array 5 includes P array elements, namely, an array element 5-1-1, ..., an array element 5-1-P₂, ..., an array element 5-P₁-1, ..., and an array element 5-P₁-P₂. The P array elements may be arranged in Pi rows and P₂ columns. The array 6 includes Q array elements, namely, an array element 6-1-1, ..., an array element 6-1-Q₂, ..., an array element 6-Q₁-1, ..., and an array element 6-Q₁-Q₂. The Q array elements may be arranged in Q₁ rows and Q₂ columns. P₁>0, P₂>0, P₁+P₂=P, Q₁>0, Q₂>0, and Q₁+Q₂=Q. In other words, the antenna 3 may include two multi-array element arrays.

In a possible implementation, the first array may be a uniform array.

Optionally, the uniform array in this application may include a uniform linear array, a uniform planar array, or a uniform volume array. The uniform linear array means that array elements are distributed on one straight line, and adjacent array elements have equal spacings. The uniform planar array means that array elements are distributed on a plane, adjacent array elements have equal spacings in each of two directions that are perpendicular to each other in the plane, and the spacings may be the same or different in different directions. The uniform volume array means that array elements are distributed in three-dimensional space, and when being observed in each of three directions (for example, three directions: horizontal, vertical, and vertical) that are perpendicular to each other in the space, adjacent array elements have equal spacings, where the spacings may be the same or different in different directions. This is not limited in this embodiment of this application.

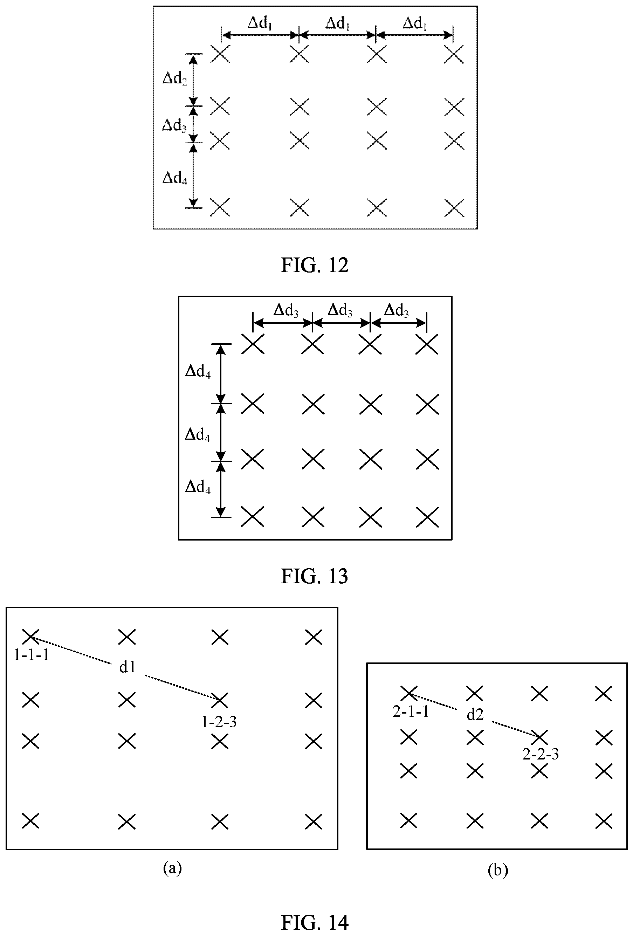

For example, the first array is a uniform linear array of four rows and four columns. FIG. 12 is a schematic diagram of a structure of a uniform linear array according to an embodiment of this application. As shown in FIG. 12, in a horizontal direction, a spacing between two adjacent array elements is Δd₁, but in a vertical direction, a spacing between an array element in a first row and an array element in a second row is Δd₂, a spacing between the array element in the second row and an array element in the third row is Δd₃, and a spacing between the array element in the third row and an array element in the fourth row is Δd₄, where Δd₂≠Δd₃≠Δd₄.

For example, the first array is a uniform planar array of four rows and four columns. FIG. 13 is a schematic diagram of a structure of a uniform planar array according to an embodiment of this application. As shown in FIG. 13, in a horizontal direction, a spacing between two adjacent array elements is Δd₃, and in a vertical direction, a spacing between two adjacent array elements is Δd₄.

Optionally, array elements in the uniform linear array, the uniform planar array, or the uniform volume array in this application may be the same or different. This is not limited in this embodiment of this application.

In a possible implementation, quantities and/or arrangement manners of first array elements included in first antennas in different antenna groups are the same.

For example, quantities of first array elements included in first antennas in different antenna groups are the same; or quantities and arrangement manners of first array elements included in first antennas in different antenna groups are the same.

For example, the N antenna groups include the antenna group 210 and the antenna group 220, the antenna group 210 includes the first antenna 211, and the antenna group 220 includes the first antenna 221. The first antenna 211 may be the array of four rows and four columns shown in FIG. 12, and the second antenna 221 may be the array of four rows and four columns shown in FIG. 13.

For example, the N antenna groups include the antenna group 210 and the antenna 220, the antenna group 210 includes the first antenna 211, and the antenna group 220 includes the first antenna 221. Both the first antenna 211 and the first antenna 221 may be shown in (a) in FIG. 11, (b) in FIG. 11, or (c) in FIG. 11.

In a possible implementation, when quantities and arrangement manners of first array elements included in first antennas in different antenna groups are the same, in the different antenna groups, a spacing between two first array elements in one first antenna is proportionally scaled up or down by a spacing between two first array elements at corresponding positions in another first antenna.

For example, an antenna array includes a first antenna group and a second antenna group. A ratio of a first antenna in the first antenna group to a first antenna in the second antenna group is k, where k is a positive number. In other words, the first antenna in the second antenna group may be obtained by scaling the first antenna in the first antenna group. Similarly, a ratio of a second antenna in the first antenna group to a second antenna in the second antenna group is k. In other words, the second antenna in the second antenna group may be obtained by scaling the second antenna in the first antenna group.

Optionally, the first antenna in the second antenna group may be obtained by translating and scaling the first antenna in the first antenna group. Similarly, the second antenna in the second antenna group may be obtained by translating and scaling the second antenna in the first antenna group.

Further, in the different antenna groups, that a product of a spacing between two first array elements in a first antenna in one antenna group and a reference frequency of a detection signal corresponding to the antenna group is the same as a product of a spacing between two first array elements at corresponding positions in a first antenna in another antenna group and a reference frequency of a detection signal corresponding to the another antenna group means that an antenna size of a first antenna in a single antenna group is related to a reference frequency of a detection signal corresponding to the antenna group. To be specific, based on reference frequencies of detection signals corresponding to two different antenna groups, a first antenna in an antenna group may be proportionally scaled to obtain a first antenna in another antenna group. Therefore, transmit beams corresponding to different antenna groups in the plurality of antenna groups (namely, the antenna array) have a same shape. In this way, a joint distance measurement error caused by a shape difference between transmit beams corresponding to different antenna groups in the plurality of antenna groups (namely, the antenna array) can be reduced.

For example, the N antenna groups include the antenna group 210 and the antenna 220, the antenna group 210 includes the first antenna 211, and the antenna group 220 includes the first antenna 221. The first antenna 211 may be the array of four rows and four columns shown in (a) in FIG. 14, and the first antenna 221 may be the array of four rows and four columns shown in (b) in FIG. 14. A spacing between the array element 1-1-1 and an array element 1-2-3 in the first antenna 211 is d1, and a spacing between the array element 2-1-1 and an array element 2-2-3 in the first antenna 221 is d2. A position of the array element 1-1-1 in the first antenna 211 corresponds to a position of the array element 2-1-1 in the first antenna 221, and a position of the array element 1-2-3 in the first antenna 211 corresponds to a position of the array element 2-2-3 in the first antenna 221. d1×f_{c1}=d2×f_{c2}, that is, d1/d2=f_{c2}/f_{c1}, where f_{c1} is the reference frequency of the detection signal 1 corresponding to the first antenna 211, and f_{c2} is the reference frequency of the detection signal 2 corresponding to the first antenna 221.

Further, in the different antenna groups, that a spacing between two first array elements in a first antenna in one antenna group is the same as a spacing between two first array elements at corresponding positions in a first antenna in another antenna group means that antenna sizes of the first antennas in the different antenna groups are the same. Therefore, a shape similarity between transmit beams corresponding to different antenna groups in the plurality of antenna groups (namely, the antenna array) is high. In this way, a joint distance measurement error caused by a shape difference between transmit beams corresponding to different antenna groups in the plurality of antenna groups (namely, the antenna array) can be reduced. In addition, after the first antenna group is designed, other antenna groups of the antenna array, such as a second antenna group and a third antenna group, may be designed in an equal proportion according to a proportion relationship of a reference frequency. Such antenna is easier to be processed and produced, and this simplifies design of the antenna array.

In another possible implementation, when quantities and arrangement manners of first array elements included in first antennas in different antenna groups are the same, in the different antenna groups, a spacing between two first array elements in a first antenna in one antenna group is the same as a spacing between two first array elements at corresponding positions in a first antenna in another antenna group.

For example, in FIG. 14, d1=d2.

It should be noted that the foregoing describes in detail the first antenna in this application. For a specific structure of the second antenna in this application, refer to the description of the first antenna. To avoid repetition, details are not described herein again.

In a possible implementation, the second antenna may include at least one second array, and the second array includes at least one second array element.

That is, the second antenna may include one second array (that is, a single array) or at least two second arrays (that is, an array group). The second array may include one second array element (that is, a single-array element array) or at least two second array elements (that is, a multi-array element array).

In a possible implementation, the second array may be a uniform array.

In a possible implementation, quantities and/or arrangement manners of second array elements included in second antennas in different antenna groups are the same.

In a possible implementation, when quantities and arrangement manners of second array elements included in second antennas in different antenna groups are the same, in the different antenna groups, a spacing between two second array elements in a second antenna in one antenna group is the same as a spacing between two second array elements at corresponding positions in a second antenna in another antenna group; or in the different antenna groups, a product of a spacing between two second array elements in a second antenna in one antenna group and a reference frequency of an echo signal corresponding to the antenna group is the same as a product of a spacing between two second array elements at corresponding positions in a second antenna in another antenna group and a reference frequency of an echo signal corresponding to the another antenna group.

In the different antenna groups, that a product of a spacing between two second array elements in a second antenna in one antenna group and a reference frequency of an echo signal corresponding to the antenna group is the same as a product of a spacing between two second array elements at corresponding positions in a second antenna in another antenna group and a reference frequency of an echo signal corresponding to the another antenna group means that an antenna size of a second antenna in a single antenna group is related to a reference frequency of an echo signal corresponding to the antenna group. To be specific, based on reference frequencies of echo signals corresponding to two different antenna groups, a second antenna in an antenna group may be proportionally scaled to obtain a second antenna in another antenna group. Therefore, receive beams and/or receive digitally formed beams corresponding to different antenna groups in the plurality of antenna groups (namely, the antenna array) have a same shape. In this way, an error of joint distance measurement based on a plurality of antenna groups caused by a shape difference between receive beams and/or receive digitally formed beams corresponding to second antennas of different antenna groups in the plurality of antenna groups (namely, the antenna array) can be reduced.

Further, in the different antenna groups, that a spacing between two second array elements in a second antenna in one antenna group is the same as a spacing between two second array elements at corresponding positions in a second antenna in another antenna group means that antenna sizes of the second antennas of the different antenna groups are the same, and shape similarity between receive beams and/or receive digitally formed beams corresponding to the second antennas of the different antenna groups in the plurality of antenna groups (namely, the antenna array) is high. In this way, an error of joint distance measurement based on a plurality of antenna groups caused by a shape difference between receive beams and/or receive digitally formed beams corresponding to the second antennas of the different antenna groups in the plurality of antenna groups (namely, the antenna array) can be reduced. In addition, after the second antenna in the first antenna group is designed, other antenna groups of the antenna array, such as a second antenna in a second antenna group and a second antenna in a third antenna group, may be designed in an equal proportion according to a proportion relationship of a reference frequency. Such second antenna is easier to be processed and produced, and this simplifies design of the antenna array.

Optionally, a first antenna and a second antenna in a same antenna group may be the same or different. This is not limited in this application.

In a possible implementation, the first processing unit in this application may include a first analog circuit and a digital-to-analog conversion circuit (optionally, may further include a first digital signal generation circuit; and when the first digital signal generation circuit is not included, the joint measurement unit and the digital-to-analog conversion circuit generate a data signal and provide the data signal to a corresponding digital-to-analog conversion circuit); and/or the second processing unit in this application may include a second analog circuit and an analog-to-digital conversion circuit (optionally, may further include a second digital signal processing circuit; and when the second digital signal processing circuit is not included, a digital signal generated by the analog-to-digital conversion circuit is directly provided to the joint measurement unit). For circuit structures included in the first processing unit and the second processing unit, refer to a circuit structure having a similar function in the conventional technology.

Optionally, the N first processing units may be independent of each other, or some or all of the N first processing units may be integrated. This is not limited in this application.

Optionally, the N second processing units may be independent of each other, or some or all of the N second processing units may be integrated. This is not limited in this application.

Optionally, the first processing unit and the second processing unit corresponding to each antenna group may be independent of each other or may be integrated. This is not limited in this application.

For example, the antenna group 210 is used as an example. The first processing unit 311 and the second processing unit 312 that correspond to the antenna group 210 may be independent of each other or may be integrated.

Optionally, processing unit groups corresponding to different antenna groups may be independent of each other, or processing unit groups corresponding to different antenna groups may be partially or completely integrated.

It should be noted that, in this application, the processing unit group corresponding to the antenna group may include a first processing unit and a second processing unit that correspond to the antenna group. The antenna group 210 is used as an example. For example, an antenna element group corresponding to the antenna group 210 may include the first processing unit 311 and the second processing unit 312.

The antenna group 210 and the antenna group 220 are used as an example. For example, an antenna element group (including the first processing unit 311 and the second processing unit 312) corresponding to the antenna group 210 and an antenna element group (including a first processing unit 321 and a second processing unit 322) corresponding to the antenna group 220 may be independent of each other or may be integrated.

Optionally, some or all processing units in the processing apparatus 300 may be integrated with the joint measurement unit 400. This is not limited in this application.

For example, the N first processing units and the joint measurement unit 400 in the processing apparatus 300 are integrated (for example, integrated in an integrated unit), and the N second processing units in the processing apparatus 300 are independent of the integrated unit. Optionally, the N second processing units may be independent of each other, or the N second processing units may be partially or completely integrated.

For example, the processing apparatus 300 includes N processing unit groups corresponding to the N antenna groups. T processing unit groups in the N processing unit groups and the joint measurement unit 400 are integrated (for example, integrated into an integrated unit). N-T processing unit groups other than the T processing unit groups in the N processing unit groups are independent of the integrated unit. T is an integer greater than 0. Optionally, the N-T processing unit groups may be independent of each other, or the N-T processing unit groups may be partially or completely integrated. Optionally, the first processing unit and the second processing unit in different processing unit groups in the N-T processing unit groups may be independent of each other or integrated.

Optionally, the joint measurement unit 400 may include one or more processors.

Optionally, the processor may be a general purpose processor, a digital signal processor (digital signal processor, DSP), a coprocessor, an application-specific integrated circuit (application-specific integrated circuit, ASIC), a field-programmable gate array (field-programmable gate array, FPGA) or another programmable logic device, a discrete gate or a transistor logic device, a discrete hardware component, or the like. This is not limited in this application.

It should be noted that in this embodiment of this application, an example in which the antenna array 200 includes N antenna groups including N first antennas and N second antennas, and the processing apparatus 300 includes N first processing units corresponding to the N first antennas and N second processing units corresponding to the N second antennas is used for description. However, this application is not limited thereto.

Optionally, the antenna array 200 may further include M antenna groups including M first antennas and M second antennas. The processing apparatus 300 may further include M first processing units corresponding to the M first antennas and M second processing units corresponding to the M second antennas. M is an integer greater than 0. A value of M is not limited in this application. Correspondingly, the joint measurement unit 400 may perform joint distance measurement based on the plurality of echo signals corresponding to the N antenna groups and a plurality of echo signals corresponding to the M antenna groups.

Optionally, structures of the M first antennas and the N first antennas may be the same or different; and/or structures of the M second antennas and the N second antennas may be the same or different; and/or structures of the M first processing units and the N first processing units may be the same or different; and/or structures of the M second processing units and the N second processing units may be the same or different. This is not limited in this application.

The foregoing describes the detection device provided in embodiments of this application with reference to FIG. 2 to FIG. 14, and the following describes a terminal provided in embodiments of this application.

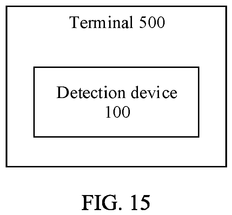

FIG. 15 is a schematic block diagram of a terminal 500 according to an embodiment of this application. As shown in FIG. 15, the terminal 500 may include the foregoing detection device 100.

Optionally, the terminal 500 may be a transportation tool or an intelligent device. For example, the terminal may be a motor vehicle (for example, an uncrewed vehicle, an intelligent vehicle, an electric vehicle, a digital vehicle, or the like), an uncrewed aerial vehicle, a railcar, a bicycle, a traffic light, or the like. For another example, the terminal may be a mobile phone, a tablet computer, a notebook computer, a personal digital assistant, a point of sale terminal, an in-vehicle computer, an augmented reality device, a virtual reality device, a wearable device, an in-vehicle terminal, or the like.

It should be understood that division of manners, cases, types, and embodiments in embodiments of this application are merely for ease of description, but should not constitute a special limitation, and features in various manners, types, cases, and embodiments may be combined when there is no contradiction.

It should be noted that the terms "first", "second", and "third" in the embodiments of this application are merely used for distinguishing, and should not be construed as any limitation on this application.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further noted that "at least one of..." in embodiments of this application represents one of listed items or any combination thereof. For example, "at least one of A, B, and C" represents the following six cases: Only A exists, only B exists, only C exists, both A and B exist, both A and C exist, both B and C exist, and A, B, and C exist.

All or some of the foregoing embodiments may be implemented using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna array, comprising a plurality of antenna groups, wherein
each of the plurality of antenna groups comprises a first antenna and a second antenna;
the first antenna is configured to transmit a detection signal, and the second antenna is configured to receive an echo signal of the detection signal; and
operating frequency bands corresponding to at least two antenna groups in the plurality of antenna groups do not completely overlap.

2. The antenna array according to claim 1, wherein
center points of the plurality of antenna groups are the same.

3. The antenna array according to claim 1 or 2, wherein
bandwidths of detection signals corresponding to different antenna groups are equal.

4. The antenna array according to any one of claims 1 to 3, wherein
reference frequencies of detection signals corresponding to different antenna groups are distributed at an equal interval.

5. The antenna array according to claim 4, wherein
first parameters of detection signals corresponding to different antenna groups are equal, and the first parameter is a product of a pulse repetition cycle of the detection signal and a reference frequency of the detection signal.

6. The antenna array according to claim 4 or 5, wherein
second parameters of different antenna groups are equal, and the second parameter is a product of the reference frequency of the detection signal and a sampling interval of the echo signal.

7. The antenna array according to any one of claims 4 to 6, wherein
third parameters of detection signals corresponding to different antenna groups are equal, and the third parameter is a product of a pulse width of the detection signal and the reference frequency of the detection signal.

8. The antenna array according to claim 6 or 7, wherein
when the detection signal is a linear frequency modulated continuous wave, reference frequencies of detection signals corresponding to different antenna groups are in direct proportion to frequency modulation slopes of the detection signals corresponding to the antenna groups.

9. The antenna array according to any one of claims 1 to 8, wherein
the first antenna comprises at least one first array, and the first array comprises at least one first array element.

10. The antenna array according to claim 9, wherein
the first array is a uniform linear array or a uniform planar array.

11. The antenna array according to claim 9 or 10, wherein
quantities and/or arrangement manners of first array elements comprised in first antennas in different antenna groups are the same.

12. The antenna array according to claim 11, wherein quantities and arrangement manners of first array elements comprised in first antennas in different antenna groups are the same, wherein
in the different antenna groups, a spacing between two first array elements in a first antenna in one antenna group is the same as a spacing between two first array elements at corresponding positions in a first antenna in another antenna group; or
in the different antenna groups, a product of a spacing between two first array elements in a first antenna in one antenna group and a reference frequency of a detection signal corresponding to the antenna group is the same as a product of a spacing between two first array elements at corresponding positions in a first antenna in another antenna group and a reference frequency of a detection signal corresponding to the another antenna group.

13. The antenna array according to any one of claims 1 to 12, wherein
the second antenna comprises at least one second array, and the second array comprises at least one second array element.

14. The antenna array according to claim 13, wherein
the second array is a uniform linear array or a uniform planar array.

15. The antenna array according to claim 13 or 14, wherein
quantities and/or arrangement manners of second array elements comprised in second antennas in different antenna groups are the same.

16. The antenna array according to claim 15, wherein quantities and arrangement manners of second arrays in different antenna groups are the same, wherein
in the different antenna groups, a spacing between two second array elements in a second antenna in one antenna group is the same as a spacing between two second array elements at corresponding positions in a second antenna in another antenna group; or
in the different antenna groups, a product of a spacing between two second array elements in a second antenna in one antenna group and a reference frequency of an echo signal corresponding to the antenna group is the same as a product of a spacing between two second array elements at corresponding positions in a second antenna in another antenna group and a reference frequency of an echo signal corresponding to the another antenna group.

17. A detection device, comprising a processing apparatus and the antenna array according to any one of claims 1 to 16, wherein the processing apparatus is connected to the antenna array; and
the processing apparatus is configured to perform joint measurement on a detection target based on a plurality of echo signals corresponding to the antenna array.

18. The detection device according to claim 17, wherein
the processing apparatus is specifically configured to perform first processing on an echo signal corresponding to each of a plurality of antenna groups, to obtain a first processed signal, so as to perform joint measurement on the detection target, wherein the first processing comprises analog signal processing and/or analog-to-digital conversion processing.

19. The detection device according to claim 18, wherein
the processing apparatus is specifically configured to: perform digital signal processing on the first processed signal corresponding to each antenna group, to obtain a second processed signal; and perform joint measurement on the detection target based on second processed signals corresponding to the plurality of antenna groups.

20. The detection device according to claim 19, wherein
the digital signal processing comprises performing pulse compression processing in at least one of the following dimensions: a fast time dimension, a slow time dimension, an array element dimension of a second antenna, and an array element dimension of a first antenna.

21. A terminal, wherein the terminal comprises the detection device according to any one of claims 17 to 20.

22. The terminal according to claim 21, wherein the terminal is a vehicle.
